# EUROPEAN PATENT APPLICATION

(11) **EP 4 597 397 A1**
(43) Date of publication of application: **06.08.2025**
(21) Application number: 23897129.5
(22) Date of filing: 01.08.2023
(51) Int. Cl.: G06Q 30/015, G06Q 30/0207, G06Q 50/10

(54) **TIRE MANAGEMENT APPARATUS**

(30) Priority: 02.12.2022 JP 2022193690
(71) Applicant: BRIDGESTONE CORPORATION, Chuo-ku Tokyo 104-8340 (JP)
(72) Inventor: TAKADA Chie, Tokyo 104-8340 (JP); KAWAMURA Akiko, Tokyo 104-8340 (JP); OGURA Kenta, Tokyo 104-8340 (JP); TAKAMURA Keiichi, Tokyo 104-8340 (JP); WU Qian, Tokyo 104-8340 (JP); KOBAYASHI Chikako, Tokyo 104-8340 (JP); HIRAJIMA Satoshi, Tokyo 104-8340 (JP)
(74) Representative: Marks & Clerk LLP
(86) International application number: PCT/JP2023/028176
(87) International publication number: WO 2024/116469

(57) **Abstract**

A tire management apparatus (10) is a tire management apparatus for calculating and managing a sustainability ratio of a tire and includes an acquisition interface (131) configured to acquire raw material information including information on raw materials of the tire and manufacturing information including information regarding manufacturing of the tire, a calculator (132) configured to calculate a sustainability ratio based on the raw material information and the manufacturing information, the sustainability ratio being a ratio of the weight of sustainable material in the tire to the weight of the tire, and an information management unit (133) configured to manage information regarding the calculated sustainability ratio.

## Description

### TECHNICAL FIELD

The present disclosure relates to a tire management apparatus.

### BACKGROUND

Tire information management has conventionally focused on information such as the tire manufacturing plant, the tire manufacturing date, and the tread remaining groove depth and thermal history during tire use. This information is used from the perspective of product tracing, tire durability, and prediction of replacement time. For example, Patent Literature (PTL) 1 discloses a technique for utilizing information on the remaining groove depth of a tire.

### CITATION LIST

### Patent Literature

PTL 1: JP 2021-047683 A

### SUMMARY

### (Technical Problem)

From the perspective of environmental protection, the raw materials used in tires are required to be sustainable, and a shift is taking place from materials derived from fossil resources to sustainable materials with a low environmental impact, such as renewable materials, recycled materials, and biodegradable materials. On the other hand, information on the usage rate of sustainable materials in each tire and what types of sustainable materials are used is effective information from the perspective of information disclosure and for business development with a focus on sustainability. At present, however, this information is not managed in a way that can be easily traced or utilized for business purposes, such as the aforementioned tire manufacturing date and tread remaining groove depth.

It is an aim of the present disclosure, conceived in light of such circumstances, to provide a tire management apparatus that promotes the spread of tires with a high usage rate of sustainable materials. It is also an aim of the present disclosure to provide an apparatus for ascertaining and managing the sustainability ratio of tires so that the sustainability ratio can be utilized in business, and a means for utilizing this information. It is also an aim of the present disclosure to popularize products with a high sustainability ratio through the provision of this apparatus and means for utilization, thereby contributing to reducing the environmental impact.

### (Solution to Problem)

(1) A tire management apparatus according to an embodiment of the present disclosure is
   a tire management apparatus for calculating and managing a sustainability ratio of a tire, the tire management apparatus including:
   an acquisition interface configured to acquire raw material information including information on raw materials of the tire and manufacturing information including information regarding manufacturing of the tire;
   a calculator configured to calculate a sustainability ratio based on the raw material information and the manufacturing information, the sustainability ratio being a ratio of a weight of sustainable material in the tire to a weight of the tire; and
   an information management unit configured to manage information regarding the calculated sustainability ratio.
(2) As an embodiment of the present disclosure, in (1),
   the acquisition interface is configured to acquire customer information including information on a user of the tire, and
   the information management unit is configured to update the customer information based on the calculated sustainability ratio.
(3) As an embodiment of the present disclosure, in (2),
   the information management unit is configured to provide the user with information on a monetary value based on the sustainability ratio and manage the monetary value.
(4) As an embodiment of the present disclosure, in (3),
   the acquisition interface is configured to acquire information regarding travel of a vehicle having the tire mounted thereon, and
   the information management unit is configured to vary the monetary value according to a travel distance of the vehicle.
(5) As an embodiment of the present disclosure, in any one of (2) to (4),
   the information management unit is configured to update the customer information when the user purchases the tire.
(6) As an embodiment of the present disclosure, in (1),
   the tire has attached thereto an indicator containing an identifier,
   the acquisition interface is configured to acquire information indicating that the indicator has been read,
   the information management unit is configured to provide information on the tire corresponding to the identifier in a case in which the indicator has been read, and
   the information on the tire includes at least the sustainability ratio.
(7) As an embodiment of the present disclosure, in (6),
   the information on the tire includes information regarding recycling of the tire.
(8) As an embodiment of the present disclosure, in (6) or (7),
   the information on the tire includes the information on the raw materials of the tire.
(9) As an embodiment of the present disclosure, in any one of (1) to (8),
   the calculator is configured to calculate the sustainability ratio when the tire is manufactured.
(10) As an embodiment of the present disclosure, in (1),
   the acquisition interface is configured to acquire information on manufacturing or transportation of the tire and information regarding travel of a vehicle having the tire mounted thereon,
   the calculator is configured to calculate a CO₂ emission amount based on the information on manufacturing or transportation of the tire and the information regarding travel of the vehicle, and
   the information management unit is configured to manage the information regarding the sustainability ratio and information regarding the CO₂ emission amount.
(11) As an embodiment of the present disclosure, in (10),
   the acquisition interface is configured to acquire customer information including information on a user of the tire, and
   the information management unit is configured to update the customer information based on the calculated sustainability ratio and the CO₂ emission amount.
(12) As an embodiment of the present disclosure, in (11),
   the information management unit is configured to provide the user with information on a monetary value based on the sustainability ratio and the CO₂ emission amount and manage the monetary value.
(13) As an embodiment of the present disclosure, in (12),
   the information management unit is configured to vary the monetary value according to a travel distance of the vehicle.
(14) As an embodiment of the present disclosure, in (1),
   the calculator is configured to calculate an environmental score that is a numerical value indicating how environmentally friendly the tire is as a product based on the calculated sustainability ratio and an environmental index different from the sustainability ratio, and
   the information management unit is configured to manage information regarding the calculated environmental score.
(15) As an embodiment of the present disclosure, in (14),
   the information management unit is configured to provide the user with information on a monetary value based on the environmental score and manage the monetary value.

### (Advantageous Effect)

According to the present disclosure, a tire management apparatus that promotes the spread of tires with a high usage rate of sustainable materials can be provided. According to the present disclosure, an apparatus for ascertaining and managing the sustainability ratio of tires so that the sustainability ratio can be utilized in business, and a means for utilizing this information, can also be provided.

### BRIEF DESCRIPTION OF THE DRAWINGS

In the accompanying drawings:
FIG. 1 is a diagram illustrating a configuration example of a tire management apparatus according to an embodiment of the present disclosure;
FIG. 2 is a diagram illustrating a configuration example of a tire management system that includes the tire management apparatus of FIG. 1;
FIG. 3 is a diagram illustrating raw material information;
FIG. 4 is a diagram illustrating manufacturing information;
FIG. 5 is a diagram illustrating customer information; and
FIG. 6 is a flowchart illustrating an example of processing in a tire management method performed by the tire management apparatus.

### DETAILED DESCRIPTION

A tire management apparatus according to an embodiment of the present disclosure is described below with reference to the drawings. Parts in the drawings that are the same or correspond are allotted the same reference signs. In the explanation of the present embodiment, a description of identical or equivalent portions is omitted or simplified as appropriate.

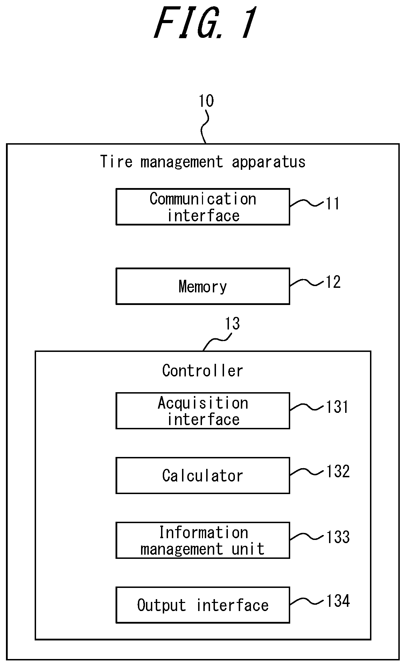

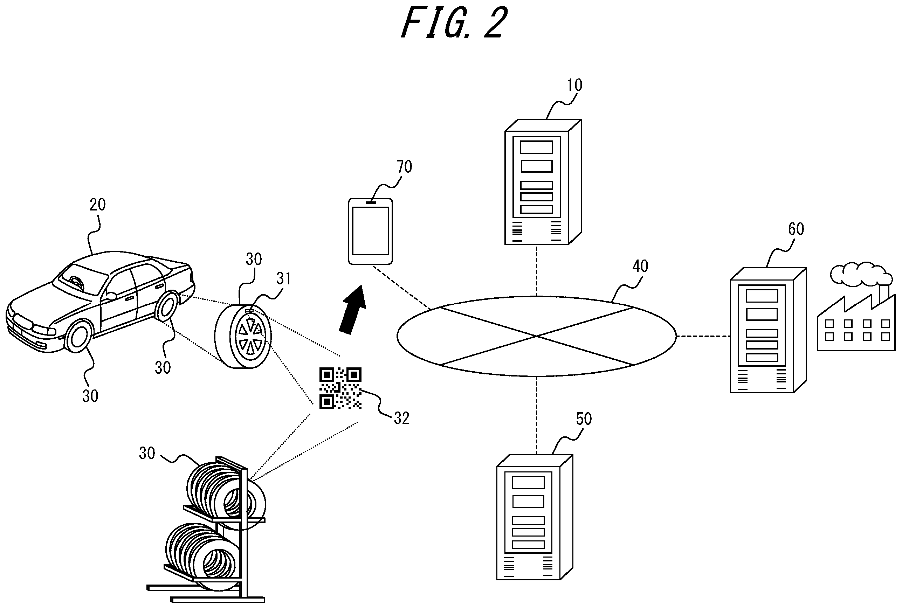

FIG. 1 is a diagram illustrating a configuration example of a tire management apparatus 10 according to the present embodiment. FIG. 2 is a diagram illustrating a configuration example of a tire management system that includes the tire management apparatus 10 of FIG. 1. The tire management apparatus 10 calculates and manages a sustainability ratio of a tire 30. In the present embodiment, the sustainability ratio is described as the ratio of the weight of sustainable material in the tire 30 to the weight of the tire 30. As another example, the sustainability ratio may be defined as the ratio between the content of the sustainable material and the content of other materials. Sustainable materials are those materials of the tire 30 that are not derived from fossil resources. Sustainable materials are materials that are environmentally friendly, such as renewable materials and materials of recycled and biodegradable origin, though these examples are not limiting. Renewable materials are renewable resources that can be used as materials for the tire 30 and include bio-derived materials, i.e., materials derived from plants and animals. Materials of recycled origin are materials obtained by recycling. Any method, such as material recycling or chemical recycling, can be used for the materials of recycled origin. Materials of biodegradable origin are materials obtained from substances that have been decomposed, for example by microbial activity. In the present embodiment, the tire 30 is for a vehicle 20 such as a passenger car, truck, or bus, but may also be for aircraft and the like.

The tire management apparatus 10 includes a communication interface 11, a memory 12, and a controller 13. The controller 13 includes an acquisition interface 131, a calculator 132, an information management unit 133, and an output interface 134. The tire management apparatus 10 may have the hardware configuration of a computer, for example. Details of the constituent elements of the tire management apparatus 10 are described below.

The tire management apparatus 10, together with a first server 50 and a second server 60 connected by a network 40, may form a tire management system. The network 40 is, for example, the Internet. The network 40 may be configured for a portion thereof to include a Local Area Network (LAN), for example. The tire management system may be configured further to include a terminal apparatus 70 connected by the network 40. The tire management system may be configured further to include a computer of a dealer of goods (hereinafter "shop") connected by the network 40. The goods may, for example, be the tire 30, daily necessities, or gasoline or electricity supplied to the vehicle 20, though these examples are not limiting.

Each of the first server 50 and the second server 60 is, for example, a different computer from the tire management apparatus 10. In the present embodiment, the first server 50 is a computer of a supplier of materials (raw materials) for the tire 30 and manages raw material information including information on the raw materials of the tire 30. In the present embodiment, the second server 60 is a computer of a tire manufacturer who manufactures the tire 30 and manages manufacturing information including information regarding the manufacturing of the tire 30. The tire management apparatus 10 can acquire or share the raw material information and the manufacturing information via the network 40. In a conventional management method for the tire 30, information regarding the manufacturing or raw materials of the tire 30 was limited to use of the manufacturing year or manufacturing location (plant), making it difficult to utilize information regarding sustainable materials. In the present embodiment, the tire management apparatus 10 forms part of the system illustrated in FIG. 2 and can use the raw material information and manufacturing information to enable utilization of information regarding sustainable materials.

The terminal apparatus 70 is a general purpose mobile terminal such as a smartphone or tablet terminal but is not limited to such a mobile terminal, as long as the terminal apparatus 70 includes an imaging function and a display function. The terminal apparatus 70 may be used by a user, consumer, or the like of the tire 30. Here, the user is the driver or owner of the vehicle 20 on which the tire 30 is mounted. The consumer is a person who wishes to purchase the tire 30.

In the present embodiment, the tire 30 has attached thereto an indicator 31 containing an identifier 32. The indicator 31 may be adhered to or printed on the tire 30. The terminal apparatus 70 may use the imaging function to capture an image of the identifier 32 attached to the tire 30 and transmit information indicating that the indicator 31 has been read to the tire management apparatus 10 via the network 40. The information indicating that the indicator 31 has been read may include information on the model number of the tire 30 identified by the identifier 32. The imaging function is, for example, realized by a camera included in the terminal apparatus 70. The terminal apparatus 70 may also acquire information such as information on the tire 30 from the tire management apparatus 10 via the network 40 and use the display function to display the information to the user or consumer. Specific case examples and the content of the information are described below. The display function is, for example, realized by a display such as an LCD included in the terminal apparatus 70. Here, the terminal apparatus 70 may include a touch panel display integrated with a touch sensor that detects contact by the user and identifies the contact position.

The constituent elements of the tire management apparatus 10 are now described in detail. The communication interface 11 is configured to include one or more communication modules that connect to the network 40. The communication interface 11 may include a communication module corresponding to mobile communication standards, such as 4G (4^{th} Generation) and 5G (5^{th} Generation). The communication interface 11 may include a communication module corresponding to wireless LAN standards (for example, IEEE802.11). The communication interface 11 may include a communication module corresponding to wired LAN standards.

The memory 12 includes one or more memories. The memory can, for example, be a semiconductor memory, a magnetic memory, or an optical memory, but is not limited to these examples and can be any memory. The memory 12 is, for example, built into the tire management apparatus 10, but the memory 12 can also be configured to be accessed externally by the tire management apparatus 10 via any interface.

The memory 12 stores various data used in the various calculations performed by the controller 13. The memory 12 may also store the results and intermediate data of the various calculations performed by the controller 13.

In the present embodiment, the memory 12 may store raw material information and manufacturing information acquired via the communication interface 11. The memory 12 may also store customer information including information about the user of the tire 30.

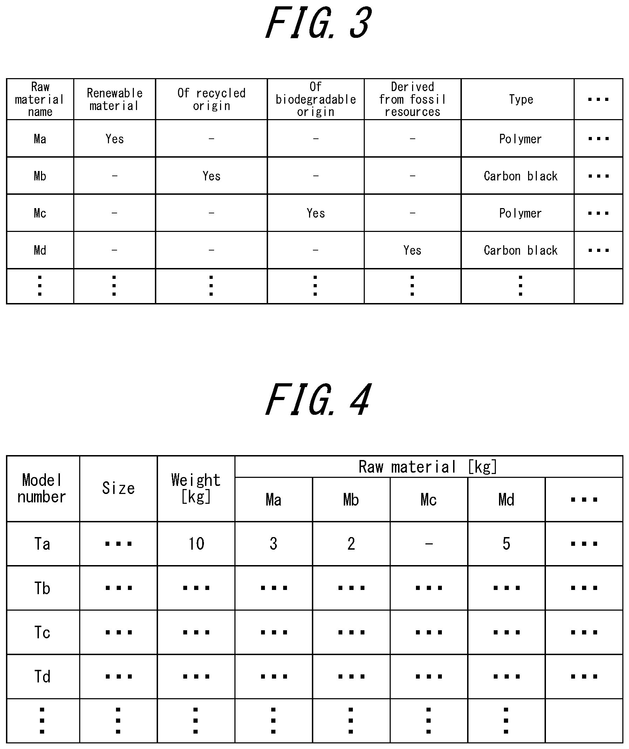

FIG. 3 is a diagram illustrating raw material information. The raw material information may be a table indicating what kind of material each of the raw materials used in manufacturing of the tire 30 is. In the example in FIG. 3, the raw material whose name is Ma (hereafter denoted as raw material Ma) is a renewable material (e.g., bio-derived). Raw material Mb is of recycled origin. Raw material Mc is of biodegradable origin. Raw material Md is derived from fossil resources. In the example in FIG. 3, raw material Ma, raw material Mb, and raw material Mc correspond to sustainable materials. In the example in FIG. 3, the type column indicates what each raw material is. Polymers and carbon black are listed, but these examples are not limiting. Zinc oxide, for example, may also be used as a type of raw material.

FIG. 4 is a diagram illustrating manufacturing information. The manufacturing information may be a table listing the specifications and raw material weights for each type (model number) of tire 30. In the example in FIG. 4, a tire 30 with model number Ta, for example, weighs 10 kg and is manufactured using 3 kg of raw material Ma, 2 kg of raw material Mb, and 5 kg of raw material Md as materials. In FIG. 4, the size and weight are listed as specifications for the tire 30, but the specifications are not limited to these items. The manufacturing information may also be maintained in different tables for each size of tire 30.

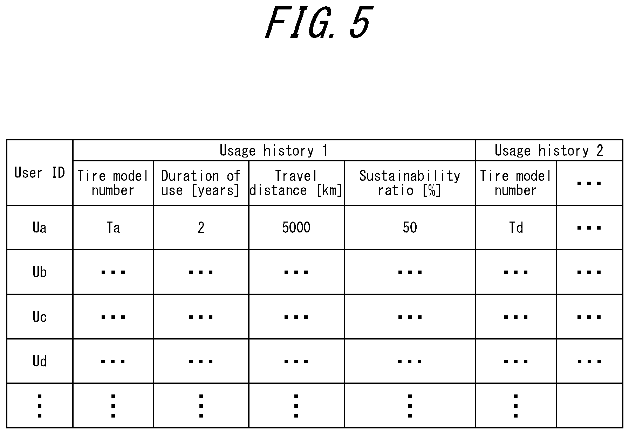

FIG. 5 is a diagram illustrating customer information. The customer information may be a table illustrating the usage history of the tire 30 for each user. In the example in FIG. 5, the user has a unique ID (IDentifier). The usage history is added when a tire 30 is purchased. The items in the usage history may include the model number of the tire 30, the duration of use of the tire 30, the travel distance of the vehicle 20 with the tire 30, and the sustainability ratio calculated as described below. In the example in FIG. 5, the user with ID Ua used the tire 30 with model number Ta, which has a sustainability ratio of 50%, for two years and replaced it with the tire 30 with model number Td after the travel distance reached 5000 km.

The controller 13 includes one or more processors. The processors can, for example, be a general purpose processor or dedicated processor specialized for specific processing, but these examples are not limiting, and any processor may be used. The controller 13 controls the overall operations of the tire management apparatus 10.

Here, the tire management apparatus 10 may have the following software configuration. One or more programs used to control the operations of the tire management apparatus 10 are stored in the memory 12. When read by the processor of the controller 13, the programs stored in the memory 12 cause the processor to function as the acquisition interface 131, the calculator 132, the information management unit 133, and the output interface 134.

The acquisition interface 131 acquires the raw material information and manufacturing information. The acquisition interface 131 may also acquire the customer information. The acquisition interface 131 may further acquire information regarding the travel of the vehicle 20 having the tire 30 mounted thereon or information indicating that the indicator 31 has been read. The information regarding the travel of the vehicle 20 may, for example, include the travel distance (see FIG. 5), which may be entered by the user using the terminal apparatus 70. In a case in which the manufacturing information includes information on the manufacturing or transportation of the tire 30, the acquisition interface 131 may acquire information about the manufacturing or transportation of the tire 30. The information on the manufacturing or transportation of the tire 30 may be used in the calculation of the CO₂ emission amount.

Based on the raw material information and the manufacturing information, the calculator 132 calculates the sustainability ratio, which is the ratio of the weight of the sustainable material in the tire 30 to the weight of the tire 30. According to the manufacturing information in FIG. 4, a tire 30 with model number Ta, for example, weighs 10 kg and is manufactured using 3 kg of raw material Ma, 2 kg of raw material Mb, and 5 kg of raw material Md as materials. According to the raw material information in FIG. 3, raw material Ma and raw material Mb are sustainable materials, and raw material Md is derived from fossil resources (non-sustainable material). For the tire 30 with model number Ta, the calculator 132 calculates the sustainability ratio, which is the ratio of the weight of the sustainable material (3 kg + 2 kg) to the weight of the tire 30 (10 kg), to be 50%. The calculator 132 may calculate the sustainability ratio when the tire 30 is manufactured so as to manage the sustainability ratio of the tire 30 without omission.

The calculator 132 may calculate the CO₂ emission amount based on the information on manufacturing or transportation of the tire 30 and the information regarding travel of the vehicle 20. The calculator 132 may calculate the CO₂ emission amount due to the manufacture of the tire 30 based on the manufacturing information on the tire 30, for example by adding up the CO₂ emission amount generated in each manufacturing process. The calculator 132 may also calculate the CO₂ emission amount due to transportation of the tire 30 based on information on transportation of the tire 30, for example, by multiplying the travel distance of the tire 30 by a coefficient determined in advance from past transportation performance data or the like. Here, the calculator 132 may calculate only one of the CO₂ emission amount due to the manufacture of the tire 30 and the CO₂ emission amount due to the transportation of the tire 30 or may calculate both CO₂ emission amounts.

The information management unit 133 manages information regarding the calculated sustainability ratio. Management of information includes various processes such as generating, updating, storing, and providing information. As the management of information regarding the sustainability ratio, the information management unit 133 may update customer information based on the calculated sustainability ratio. As described below, the information management unit 133 may provide an incentive based on the sustainability ratio, and the customer information allows information to be provided to each user by linking the user of the tire 30 to the sustainability ratio. Here, the information management unit 133 may update the customer information when the user purchases the tire 30 so that the user's purchase history of the tire 30 can be managed without omission. Here, the information indicating that the user purchased the tire 30 may be transmitted from the shop computer to the tire management apparatus 10 or may be entered by the user using the terminal apparatus 70.

As the management of information regarding the sustainability ratio, the information management unit 133 provides the user with information on a monetary value based on the sustainability ratio and manages the monetary value. The monetary value may, for example, be a discount when purchasing goods, the provision of a special service, or the granting of points that can be handled like money. By the sustainability ratio being linked to the monetary value, the user can be made more strongly aware of the origin of the raw materials of the tire 30. Here, the information management unit 133 may vary the monetary value according to the travel distance of the vehicle 20. For example, the monetary value may increase as the travel distance is longer for a vehicle 20 having mounted thereon a tire 30 with a high sustainability ratio. In this case, the degree of increase in monetary value may be set to be greater as the sustainability ratio of the tire 30 is higher. By the sustainability ratio and the frequency of use being associated and then linked to the monetary value, the user can be made more strongly aware of the origin of the raw materials of the tire 30.

In a case in which the calculator 132 calculates the CO₂ emission amount, the information management unit 133 may manage information regarding the sustainability ratio and information regarding the CO₂ emission amount. In this case, it is possible to manage not only the sustainability ratio but also the CO₂ emission amount for each tire 30. The information management unit 133 may then update the customer information based on the calculated sustainability ratio and CO₂ emission amount. In this case, it is possible to provide information to each user by linking the user of the tire 30 to the sustainability ratio and CO₂ emission amount. The information management unit 133 may also provide information on the monetary value based on the sustainability ratio and CO₂ emission amount to the user and manage the monetary value. Furthermore, the information management unit 133 may vary the monetary value according to the travel distance of the vehicle 20. For example, the monetary value may increase as the CO₂ emission amount is smaller, even if the sustainability ratio of the tire 30 is the same. By the sustainability ratio and CO₂ emission amount being linked to the monetary value, the user can be made more strongly aware of the environmental impact of the tire 30, including the origin of the raw materials.

As the management of information regarding the sustainability ratio, the information management unit 133 may provide information on the tire 30 corresponding to the identifier 32 in a case in which the indicator 31 has been read. The information on the tire 30 includes at least the sustainability ratio. In this case, information on the sustainability ratio for each tire 30 can be provided to consumers. The information on the tire 30 may also include information regarding recycling of the tire 30 so that, even before purchasing the tire 30, the consumer can know how to sort the tire 30 for recycling, for example. The information on the tire 30 may also include information on the raw materials of the tire 30 so that the consumer can learn detailed information on the raw materials of the tire 30 in association with the sustainability ratio. In this case, the information on the raw materials of the tire 30 can be tracked or confirmed, which improves the visibility of the characteristics of the tire 30 and consumer confidence in the tire 30.

Here, in the present embodiment, the information management unit 133 updates the customer information and stores the customer information in the memory 12 along with an update history. As another example of management, customer information may be managed in a distributed manner. For example, customer information including the update history may be stored and managed using blockchain technology. In the present embodiment, the raw material information and the manufacturing information are managed by the first server 50 and the second server 60, respectively. As another example of management, the raw material information and the manufacturing information may similarly be managed in a distributed manner. Furthermore, a storage area (cloud) on the network 40 may be used for storage of data such as customer information, raw material information, and manufacturing information.

The output interface 134 outputs the information provided by the information management unit 133 to a display apparatus or the like. The display apparatus includes, for example, a display provided in the terminal apparatus 70. The first server 50, the second server 60, the display of the shop computer, and the like can also function as display apparatuses for displaying the calculation results.

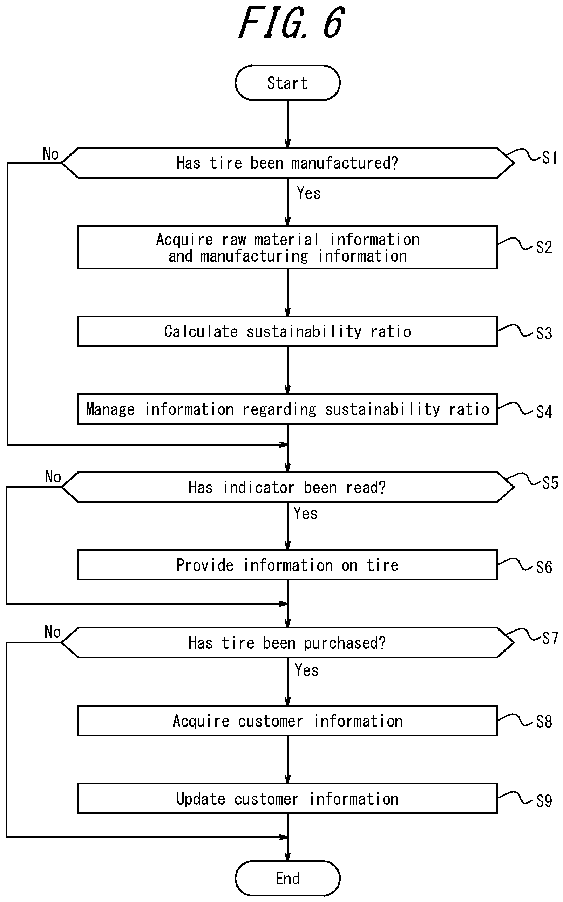

FIG. 6 is a flowchart illustrating an example of processing in a tire management method performed by the controller 13 of the tire management apparatus 10.

When the tire 30 has been manufactured (Yes in step S1), the acquisition interface 131 acquires the raw material information and manufacturing information (step S2). At a timing other than when the tire 30 has been manufactured (No in step S1), the process proceeds to step S5.

Based on the raw material information and the manufacturing information, the calculator 132 calculates the sustainability ratio of the tire 30 (step S3).

The information management unit 133 manages the information regarding the calculated sustainability ratio (step S4). For example, the information management unit 133 may associate the newly manufactured tire 30 with the calculated sustainability ratio and store the result in the memory 12.

In a case in which the indicator 31 has been read (Yes in step S5), the information management unit 133 may provide information on the tire 30 corresponding to the identifier 32 (step S6). In a case in which the indicator 31 has not been read (No in step S5), the process proceeds to step S7.

In a case in which the tire 30 has been purchased (Yes in step S7), the acquisition interface 131 acquires the customer information (step S8). Here, at a timing other than when the tire 30 has been purchased (No in step S7), the series of processes may be terminated.

The information management unit 133 adds the user's usage history, including the model number and the like of the purchased tire 30 (see FIG. 5), to update the customer information (step S9).

The processes of the tire management method in FIG. 6 are an example. As described above, the information management unit 133 can provide a variety of information related to the sustainability ratio, for example by providing information on a monetary value based on the sustainability ratio. Example applications of the tire management method performed by the tire management apparatus 10 are described below.

### (Application example 1)

As an example of providing information on the tire 30 in the case in which the indicator 31 has been read, the information management unit 133 may provide information about a first-generation tire 30 that has not been recycled, so as to indicate what the tire 30 will be used for next. In this case, options for how the tire 30 is used next may be displayed for the user to choose from using the terminal apparatus 70, for example. Users of a first-generation tire 30 can contribute to the environment by recycling the tire 30. In addition, the user may be given an incentive upon recycling.

### (Application example 2)

As an example of providing information on the monetary value, in a case in which a user is determined to have purchased a tire 30 with a high sustainability ratio based on the customer information, preferential treatment in maintenance of the tire 30 may be provided to that user. The information management unit 133 may provide that user with a priority pass to give the user priority for maintenance work on the tire 30, for example.

### (Application example 3)

In a case in which a user is determined to have purchased a tire 30 with a high sustainability ratio based on the customer information, a benefit that can be attached to the tire 30 may be granted to that user. The information management unit 133 provides information to that user indicating that the benefit has been granted. A label or the like may be attached to or printed on the side of the tire 30 when the user shows the information at the retailer of the tire 30, for example. The label may, for example, include a notation indicating that the tire 30 has a high sustainability ratio. Such a notation can be used to suit individual needs, such as to demonstrate a high level of environmental awareness or to advocate the importance of environmental friendliness.

### (Application example 4)

Although it has been explained that information regarding the CO₂ emission amount can be managed in addition to the information regarding the sustainability ratio, environmental characteristics such as the fuel efficiency of the vehicle 20 may be used instead of or together with the CO₂ emission amount. The information on environmental characteristics may be entered by the user using the terminal apparatus 70 and acquired by the acquisition interface 131. For example, the fuel efficiency of the vehicle 20 may be taken into account to enable a higher level of environmental friendliness beyond just the raw materials of the tires 30. According to such environmental characteristics, the information management unit 133 may vary the monetary value that is based on the sustainability ratio. Furthermore, more accurate values can be derived as the environmental characteristics by using a calculation based on the rolling performance of the tire 30 in calculating the CO₂ emission amount during travel. For example, the CO₂ emission amount is calculated by multiplying the amount of activity (for example, the travel distance of the vehicle 20) by an emission factor. In the calculation based on the rolling performance of the tire 30, the travel distance of the vehicle 20 having the target tire 30 mounted thereon may be corrected by the rolling performance of the tire 30, and the CO₂ emission amount may then be calculated using the corrected travel distance. The correction may be made so that the travel distance is shorter as the rolling performance is higher, i.e., as the rolling resistance coefficient is lower.

### (Application example 5)

As an example of providing information on the monetary value, in a case in which a user is determined to have purchased a tire 30 with a high sustainability ratio based on the customer information, preferential treatment may be provided to that user at a shop. The information management unit 133 may provide the user with a discount coupon that allows the user to purchase goods at the shop at a lower price than the general public. The goods may, for example, be gasoline or electricity supplied to the vehicle 20, or general daily necessities. The information management unit 133 may also provide the user with a discount on highway tolls. The information management unit 133 may also provide points to the user according to the degree of the sustainability ratio.

### (Application example 6)

The information management unit 133 may utilize information indicating that a tire 30 with a high sustainability ratio has been purchased (purchase information) as source information for donating to an environmental protection organization or the like. The purchase information may, for example, be transmitted from the shop computer to the tire management apparatus 10 or may be entered by the user using the terminal apparatus 70. For example, the tire manufacturer may use the purchase information managed by the information management unit 133 in the case of donating a portion of sales to an environmental protection organization or the like according to the sustainability ratio of the tire 30.

### (Application example 7)

The use of a non-purchased tire 30, such as car rental or car sharing, can be covered in addition to a user-owned vehicle 20. The terminal apparatus 70 can be used to read the indicator 31 attached to the tire 30 of a rental car or the like used by the user. In a case of determining that the user has selected a rental car having mounted thereon a tire 30 with a high sustainability ratio, the information management unit 133 may associate the sustainability ratio with the user and provide an incentive to that user.

### (Application example 8)

The calculator 132 may calculate an environmental score based on the calculated sustainability ratio of the tire 30 and an environmental index different from the sustainability ratio. The environmental score is a numerical value indicating how environmentally friendly the tire 30 is as a product. For example, the environmental score may be such that a higher numerical value indicates a greater degree of environmental friendliness (smaller environmental impact). The environmental index is a parameter related to environmental friendliness, including the sustainability ratio. Apart from the sustainability ratio, the environmental index may, for example, include the rolling performance of the tire 30, the amount of environmentally hazardous substances included in the product (amount of substances of concern), and the like. The environmental score may, for example, be calculated by multiplying each of the sustainability ratio and the quantified environmental index by a predetermined coefficient and then adding them together. In this case, the information management unit 133 may manage information regarding the calculated environmental score. This makes it possible to ascertain and manage the overall degree of environmental friendliness, including not only the usage rate of sustainable materials in the tire 30, but also other environmental indices. The information management unit 133 may also provide information on the monetary value based on the environmental score to the user and manage the monetary value. By the environmental score being linked to the monetary value, the user can be made more strongly aware of the environmental friendliness of the tire 30.

As described above, the tire management apparatus 10 according to the present embodiment can, with the above configuration, ascertain and manage the sustainability ratio, which is an index expressing the usage rate of sustainable materials in tires 30, and indicate the sustainability ratio to users and consumers. Based on the sustainability ratio, users and consumers can be made aware of the origin of the raw materials of the tire 30, which can promote the spread of tires 30 with a high usage rate of sustainable materials. The sustainability ratio of the tire 30 can also be used in business, as in the above application examples. In other words, the obtained information can be applied to provision of services and the like utilizing the sustainability ratio.

Although embodiments of the present disclosure have been described based on the drawings and examples, it is to be noted that various changes or modifications will be apparent to those skilled in the art based on the present disclosure. Therefore, such changes or modifications are to be understood as included within the scope of the present disclosure. For example, the functions and the like included in the components and the like may be reordered in any logically consistent way. Furthermore, components and the like may be combined into one or divided. An embodiment of the present disclosure can also be realized as a method or program to be executed by a processor provided in an apparatus or as a storage medium with the program recorded thereon. Such embodiments are also to be understood as included within the scope of the present disclosure.

### Contribution to the Sustainable Development Goals (SDGs) Initiated by the United Nations

SDGs have been proposed to realize a sustainable society. An embodiment of the present disclosure could be technology that contributes to goals such as "No.9 : Build infrastructure for industry and innovation".

### REFERENCE SIGNS LIST

- 10: Tire management apparatus
- 11: Communication interface
- 12: Memory
- 13: Controller
- 20: Vehicle
- 30: Tire
- 31: Indicator
- 32: Identifier
- 40: Network
- 50: First server
- 60: Second server
- 70: Terminal apparatus
- 131: Acquisition interface
- 132: Calculator
- 133: Information management unit
- 134: Output interface

## Claims

1. A tire management apparatus for calculating and managing a sustainability ratio of a tire, the tire management apparatus comprising:
an acquisition interface configured to acquire raw material information including information on raw materials of the tire and manufacturing information including information regarding manufacturing of the tire;
a calculator configured to calculate a sustainability ratio based on the raw material information and the manufacturing information, the sustainability ratio being a ratio of a weight of sustainable material in the tire to a weight of the tire; and
an information management unit configured to manage information regarding the calculated sustainability ratio.

2. The tire management apparatus according to claim 1, wherein
the acquisition interface is configured to acquire customer information including information on a user of the tire, and
the information management unit is configured to update the customer information based on the calculated sustainability ratio.

3. The tire management apparatus according to claim 2, wherein the information management unit is configured to provide the user with information on a monetary value based on the sustainability ratio and manage the monetary value.

4. The tire management apparatus according to claim 3, wherein
the acquisition interface is configured to acquire information regarding travel of a vehicle having the tire mounted thereon, and
the information management unit is configured to vary the monetary value according to a travel distance of the vehicle.

5. The tire management apparatus according to any one of claims 2 to 4, wherein the information management unit is configured to update the customer information when the user purchases the tire.

6. The tire management apparatus according to claim 1, wherein
the tire has attached thereto an indicator containing an identifier,
the acquisition interface is configured to acquire information indicating that the indicator has been read,
the information management unit is configured to provide information on the tire corresponding to the identifier in a case in which the indicator has been read, and
the information on the tire includes at least the sustainability ratio.

7. The tire management apparatus according to claim 6, wherein the information on the tire includes information regarding recycling of the tire.

8. The tire management apparatus according to claim 6 or 7, wherein the information on the tire includes the information on the raw materials of the tire.

9. The tire management apparatus according to any one of claims 1 to 8, wherein the calculator is configured to calculate the sustainability ratio when the tire is manufactured.

10. The tire management apparatus according to claim 1, wherein
the acquisition interface is configured to acquire information on manufacturing or transportation of the tire and information regarding travel of a vehicle having the tire mounted thereon,
the calculator is configured to calculate a CO₂ emission amount based on the information on manufacturing or transportation of the tire and the information regarding travel of the vehicle, and
the information management unit is configured to manage the information regarding the sustainability ratio and information regarding the CO₂ emission amount.

11. The tire management apparatus according to claim 10, wherein
the acquisition interface is configured to acquire customer information including information on a user of the tire, and
the information management unit is configured to update the customer information based on the calculated sustainability ratio and the CO₂ emission amount.

12. The tire management apparatus according to claim 11, wherein the information management unit is configured to provide the user with information on a monetary value based on the sustainability ratio and the CO₂ emission amount and manage the monetary value.

13. The tire management apparatus according to claim 12, wherein the information management unit is configured to vary the monetary value according to a travel distance of the vehicle.

14. The tire management apparatus according to claim 1, wherein
the calculator is configured to calculate an environmental score that is a numerical value indicating how environmentally friendly the tire is as a product based on the calculated sustainability ratio and an environmental index different from the sustainability ratio, and
the information management unit is configured to manage information regarding the calculated environmental score.

15. The tire management apparatus according to claim 14, wherein the information management unit is configured to provide the user with information on a monetary value based on the environmental score and manage the monetary value.
